# EUROPÄISCHE PATENTSCHRIFT

(11) **EP 0 640 432 B1**
(45) Veröffentlichungstag und Bekanntmachung des Hinweises auf die Patenterteilung: **06.11.1996**
(21) Anmeldenummer: 94112553.6
(22) Anmeldetag: 11.08.1994
(51) Int. Cl.: B23Q 3/157

(54) **Werkzeugmaschine**
Machine tool
Machine outil

(30) Priorität: 31.08.1993 DE 4329252
(43) Veröffentlichungstag der Anmeldung: 01.03.1995
(73) Patentinhaber: Chiron-Werke GmbH & Co. KG, D-78532 Tuttlingen (DE)
(72) Erfinder: Rütschle, Eugen, Dipl.-Ing., D-78570 Mühlheim (DE)
(74) Vertreter: Witte, Alexander, Dr.-Ing.

(56) Entgegenhaltungen:
- DE-A- 2 013 836
- DE-A- 3 831 869
- FR-A- 2 123 152
- FR-A- 2 145 455
- GB-A- 1 163 980
- US-A- 3 524 248

## Beschreibung

Die Erfindung betrifft eine Werkzeugmaschine mit einem entlang einer horizontalen Hauptachse verfahrbaren Fahrständer, einem am Fahrständer entlang einer vertikalen Hauptachse verfahrbaren Spindelstock mit drehbarer Spindel, einem Werkzeugmagazin, in dem eine Mehrzahl von Werkzeughaltern gespeichert und einzeln in eine Übergabeposition bringbar ist, und mit zwei Greifarmen zum Überführen der Werkzeughalter zwischen der Übergabeposition am Werkzeugmagazin und einer Arbeitsposition in der Spindel unter Beibehaltung der Orientierung der Werkzeughalter, wobei die Greifarme getrennt am Spindelstock gelagert und gleichzeitig sowie gegenläufig mit Händen zum Halten der Werkzeughalter zwischen der Übergabeposition und der Arbeitsposition entlang von Ortskurven verschwenkbar sind.

Eine Werkzeugmaschine der vorstehend genannten Art ist aus der DE-PS 38 31 869 bekannt.

Bei der bekannten Werkzeugmaschine befindet sich die Übergabeposition oberhalb der Arbeitsposition und ist in der Vorderansicht der Werkzeugmaschine seitlich gegenüber der Arbeitsposition versetzt. Die beiden Greifarme, die auf gegenüberliegenden Seiten der Arbeitsposition angelenkt sind, haben damit einen asymmetrischen Bewegungsverlauf. Die Greifarme sind nämlich einander überkreuzend zu der gemeinsamen Übergabeposition verschwenkbar, und die Ortskurven verlaufen asymmetrisch zur Arbeitsposition und damit auch asymmetrisch zur Achse des Spindelstockes.

Aus der DE-PS 20 13 836 ist eine weitere Werkzeugmaschine bekannt, bei der die Spindelachse horizontal verläuft, die Werkzeuge im Werkzeugmagazin jedoch vertikalachsig ausgerichtet sind. Die Übergabeposition am Werkzeugmagazin befindet sich oberhalb und hinter der Arbeitsposition. Die Positionen befinden sich jedoch mit ihrer jeweiligen Achsausrichtung in einer gemeinsamen Vertikalebene. Zum Überführen von Werkzeughaltern zwischen den beiden Positionen ist ein Greifarmpaar vorgesehen. Das Greifarmpaar ist insgesamt mittels einer entsprechenden Verschwenkeinheit um eine Achse verschwenkbar, die schräg zu den Achsen der Positionen verläuft, jedoch in der von diesen Achsen definierten Vertikalebene liegt. Die beiden Greifarme des Greifarmpaars sind einzeln, und zwar gegenläufig, an der Verschwenkeinheit gelagert, und zwar relativ zu einer Achse, die senkrecht zur Verschwenkachse der Verschwenkeinheit verläuft. Die Greifarme sind jeweils abgekröpft ausgebildet.

Durch einen klappsymmetrischen Bewegungsablauf der beiden Schwenkarme können daher Werkzeughalter zwischen der Übergabeposition und der Arbeitsposition hin- und hertransportiert werden, wobei sich jedoch die Ausrichtung der Werkzeughalter während dieses Überführungsvorganges um 90° ändert. Die Ortskurven der Werkzeughalter verlaufen dabei im Bereich zwischen den Positionen seitlich beabstandet von der Vertikalebene.

Bei Werkzeugmaschinen der hier interessierenden Art, insbesondere bei sogenannten Bearbeitungszentren, die vorzugsweise Bohr- und Fräsarbeiten an Werkzeugen durchführen, ist man bestrebt, einen möglichst kompakten und wenig störanfälligen Aufbau zu erreichen. In diesem Zusammenhang möchte man nach Möglichkeit den Arbeitsraum der Werkzeugmaschine möglichst vollständig abkapseln, damit herumfliegende Materialspäne und herumspritzende Bohrflüssigkeit nicht auf die übrigen Aggregate der Werkzeugmaschine gelangt, beispielsweise nicht in das Werkzeugmagazin. Je schlechter nämlich der Arbeitsraum gekapselt ist, desto eher besteht die Gefahr, daß sich Späne auf den Einspannkegeln der Werkzeughalter absetzen. Hierdurch kann es zu Beschädigungen beim Einspannen eines Werkzeughalters in die Spindel der Werkzeugmaschine kommen. Außerdem ist es bei schlecht gekapselten Werkzeugmaschinen nur mit Schwierigkeiten möglich, während des Betriebes der Werkzeugmaschine auf das Werkzeugmagazin zuzugreifen, insbesondere manuell. Dies ist jedoch gelegentlich erwünscht, um auf der Rückseite der Werkzeugmaschine bereits einen Satz Werkzeuge für den nächsten Bearbeitungsvorgang zu laden.

Der Erfindung liegt daher die Aufgabe zugrunde, eine Werkzeugmaschine der eingangs genannten Art dahingehend weiterzubilden, daß ein möglichst kompakter Aufbau entsteht, bei dem eine gute Kapselung des Arbeitsraumes möglich wird, gleichzeitig aber die Bewegungsabläufe beim Werkzeugwechsel so wenig ausladend und daher so platzsparend wie möglich ausgelegt werden können.

Diese Aufgabe wird erfindungsgemäß dadurch gelöst, daß die Übergabeposition und die Arbeitsposition in einer gemeinsamen, in Y-Richtung verlaufenden Vertikalebene liegen, daß sich die Übergabeposition im Bereich der dem Spindelstock zu weisenden Vorderseite des Fahrständers befindet, daß das Werkzeugmagazin sich von einer Rückseite des Fahrständers durch einen Tunnel im Fahrständer bis zur Übergabeposition erstreckt, und daß die Ortskurven im Bereich zwischen den Positionen seitlich beabstandet von der Vertikalebene verlaufen.

Die der Erfindung zugrunde liegende Aufgabe wird auf diese Weise vollkommen gelöst.

Durch die an sich bekannte Verlagerung des Werkzeugmagazins zur Rückseite des Fahrständers hin werden zunächst die im Magazin gespeicherten Werkzeughalter in eine beträchtliche Entfernung zum Arbeitsraum gebracht. Man kann daher beispielsweise zu beiden Seiten des Fahrständers eine entsprechende Abdeckung anbringen, insbesondere eine ziehharmonikaartig verschiebbare Trennwand, so daß die Rückseite des Fahrständers gut gegenüber dem Arbeitsraum geschützt ist.

Die Erfindung setzt nun jedoch zusätzlich die Maßnahme ein, den Übergang von der Rückseite des Fahrständers, wo die Werkzeughalter gespeichert sind, zur Vorderseite des Fahrständers, wo sich die Arbeitsposition befindet, in den Fahrständer selbst zu verlegen. Dies hat den Vorteil, daß kein gesonderter Durchgang in der Trennwand hergestellt werden muß. Vielmehr wird der Fahrständer selbst durch Ausbildung eines Tunnels in demselben als Übergang genutzt. Im Gegensatz zu herkömmlichen Maschinen kann daher auch der Bereich oberhalb des Fahrständers von vorne nach hinten gekapselt werden.

Da nun im Gegensatz zu herkömmlichen Maschinen die Übergabeposition für die Werkzeughalter in eine Stellung hinter der Arbeitsposition, das heißt der Spindelaufnahme, gewandert ist, erreicht die Erfindung durch einen extrem simplen Bewegungsablauf der Werkzeughalter einen sehr einfachen und schnellen Werkzeugwechsel innerhalb der gemeinsamen Vertikalebene beider Positionen.

Bei einem ersten bevorzugten Ausführungsbeispiel der Erfindung befindet sich die Übergabeposition oberhalb der Arbeitsposition.

Diese Maßnahme hat den Vorteil, daß die erforderlichen konstruktiven Veränderungen am Fahrständer nur den oberen Teil des Fahrständers betreffen, in dem sich keine Antriebe und dergleichen befinden. Außerdem ist es auf diese Weise eher möglich, das Werkzeugmagazin mit dem Spindelstock zu koppeln, wie noch beschrieben werden wird.

Alternativ dazu kann man aber auch die Übergabeposition unterhalb der Arbeitsposition anordnen.

Diese Maßnahme hat den Vorteil, daß eine in der Höhe reduzierte Bauweise entsteht.

Bei einer bevorzugten Ausgestaltung der Erfindung umfaßt das Werkzeugmagazin einen auf der Rückseite des Fahrständers angeordneten Speicher sowie eine sich durch den Tunnel erstreckende Transporteinrichtung.

Diese Maßnahme hat den Vorteil, daß herkömmliche Endlos-Magazine mit umlaufender Fördereinrichtung für die Werkzeughalter eingesetzt werden können. Die Werkzeughalter laufen dabei auf einer endlosen, ovalen Bahn um, was durch zwei einfache Transportrollen erreicht werden kann, um die der Endlosförderer umläuft. Der Transfer der Werkzeughalter zur Übergabeposition wird demgegenüber mittels der Transporteinrichtung bewirkt, die somit individuell auf die jeweiligen Gegebenheiten des Fahrständers ausgelegt werden kann. Die Transporteinrichtung kann darüber hinaus zusätzliche Speicherfunktionen ausüben, falls sie ebenfalls als Endlosförderer ausgebildet ist.

Bei einer anderen Gruppe von Ausführungsbeispielen ist der Speicher mit dem Spindelstock verbunden.

Diese Maßnahme hat den Vorteil, daß eine variable Werkzeugwechselebene entsteht, weil die Werkzeughalter nunmehr in jeder Vertikalposition des vertikal verfahrbaren Spindelstocks gewechselt werden können.

Bei einer Gruppe bevorzugter Ausführungsbeispiele ist hingegen der Speicher mit dem Fahrständer verbunden.

Diese Maßnahme hat den Vorteil, daß das große Gewicht des Werkzeugmagazins mit dem üblicherweise sehr solide ausgebildeten Fahrständer verfahren werden kann. Außerdem hat die starre Anbindung des Speichers am Fahrständer den Vorteil, daß der Tunnel durch den Fahrständer nur relativ klein dimensioniert werden muß.

Bei einer weiteren Gruppe bevorzugter Ausführungsbeispiele der Erfindung sind die Greifarme als Gelenkparallelogramme ausgebildet, deren parallele Stangen in einer vertikalen Ebene an Schwenkteilen, um erste, horizontale Achsen schwenkbar, angelenkt sind, wobei die Schwenkteile, um zweite, vertikale Achsen verschwenkbar, am Spindelstock gelagert sind.

Diese Maßnahme hat den Vorteil, daß ein besonders einfacher Bewegungsablauf entsteht, bei dem insbesondere die Orientierung der Werkzeughalter in sehr einfacher Weise konstant gehalten werden kann.

Bei diesen Ausführungsbeispielen der Erfindung ist bevorzugt, wenn die Greifarme mittels eines Gestänges um die ersten und die zweiten Achsen verschwenkbar sind, wobei das Gestänge
a) symmetrisch zur Vertikalebene ausgebildet ist,
b) um eine in der Vertikalebene liegende Achse verschwenkbar ist, und
c) zwei flügelartige Gelenkstücke umfaßt, die einerseits um vierte Achsen verschwenkbar sind, welche beidseits der Vertikalebene in einer zu dieser quer verlaufenden Ebene angeordnet und gemeinsam um die dritte Achse verschwenkbar sind, und andererseits über eine durch drei aufeinander senkrecht stehende Achsen definierte Gelenkanordnung mit einer der parallelen Stangen in Verbindung steht.

Diese Maßnahme hat den Vorteil, daß durch einen extrem einfachen Antrieb die gesamte Schwenkbewegung beider Greifarme erzeugt werden kann. Es ist nämlich lediglich erforderlich, das Gestänge um die dritte Achse zu verschwenken, und zwar für jeden Werkzeugwechselvorgang um einen bestimmten Winkelschritt in die eine bzw. die andere Richtung. Diese einfache Dreh-Schwenkbewegung wird durch das beschriebene Gestänge in Bewegungen der Greifarme umgesetzt, wobei diese aus einer vertikalen bzw. horizontalen Position zunächst nach oben bzw. nach unten ausgelenkt werden, seitlich zueinander ausweichen und dann schließlich in die jeweils entgegengesetzte horizontale bzw. vertikale Endlage gelangen.

Eine besonders gute Wirkung wird in diesem Falle dann erzielt, wenn das Gestänge an Hebelarmen angreift, die mit der einen parallelen Stange verbunden sind.

Diese Maßnahme hat den Vorteil, daß mit relativ geringen Bewegungskräften, bzw. einem relativ geringen Drehmoment für das Gestänge, die Schwenkbewegung durch eine entsprechende Verlängerung der Wege erzeugt werden kann.

Bei Varianten der genannten Ausführungsbeispiele bestehen die Gelenkanordnungen entweder aus drei Einzelgelenken oder aus einem Kugelgelenk, je nachdem, wie dies im Einzelfall günstiger ist.

Weitere Vorteile ergeben sich aus der Beschreibung und der beigefügten Zeichnung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Vorderansicht, teilweise aufgebrochen, auf ein Ausführungsbeispiel einer erfindungsgemäßen Werkzeugmaschine;
- Fig. 2: eine Seitenansicht der in Fig. 1 gezeigten Werkzeugmaschine;
- Fig. 3: eine Vorderansicht, ähnlich Fig. 1, jedoch für ein leicht variiertes Ausführungsbeispiel;
- Fig. 4: eine Seitenansicht, ähnlich Fig. 2, jedoch für das Ausführungsbeispiel gemäß Fig. 3;
- Fig. 5: eine Prinzipdarstellung des bei der Werkzeugmaschine gemäß den Figuren 1 und 2 verwendeten Werkzeugwechslers in einer ersten Arbeitsstellung;
- Fig. 6: den Werkzeugwechsler gemäß Fig. 5 in einer Zwischenstellung;
- Fig. 7: den Werkzeugwechsler gemäß den Figuren 5 und 6 in einer zweiten Arbeitsstellung;
- Fig. 8: den Werkzeugwechsler in der Stellung gemäß Fig. 7, in Draufsicht, in vergrößertem Maßstab und mit weiteren Einzelheiten;
- Fig. 9: den Werkzeugwechsler gemäß Fig. 8 in einer Ansicht entlang der Linie IX-IX von Fig. 8;
- Fig. 9A: in extrem vereinfachter Darstellung den Werkzeugwechsler gemäß Fig. 9, jedoch mit einem leicht variierten Aufbau;
- Fig. 10: eine schematisierte Darstellung des Bewegungsablaufes beim Werkzeugwechsel in einer Ansicht ähnlich Fig. 9; und
- Fig. 11: eine zu Fig. 10 analoge Darstellung, jedoch in einer Ansicht ähnlich derjenigen von Fig. 8.

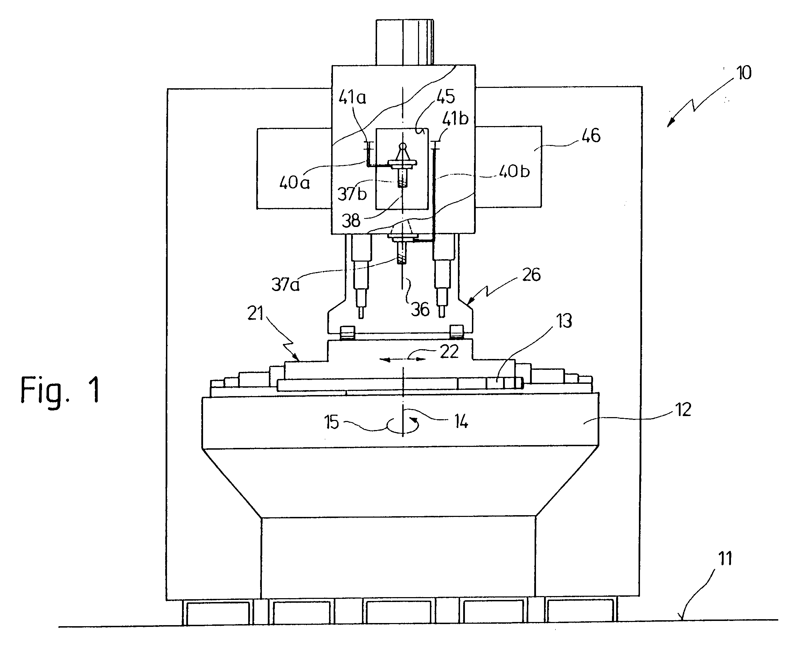

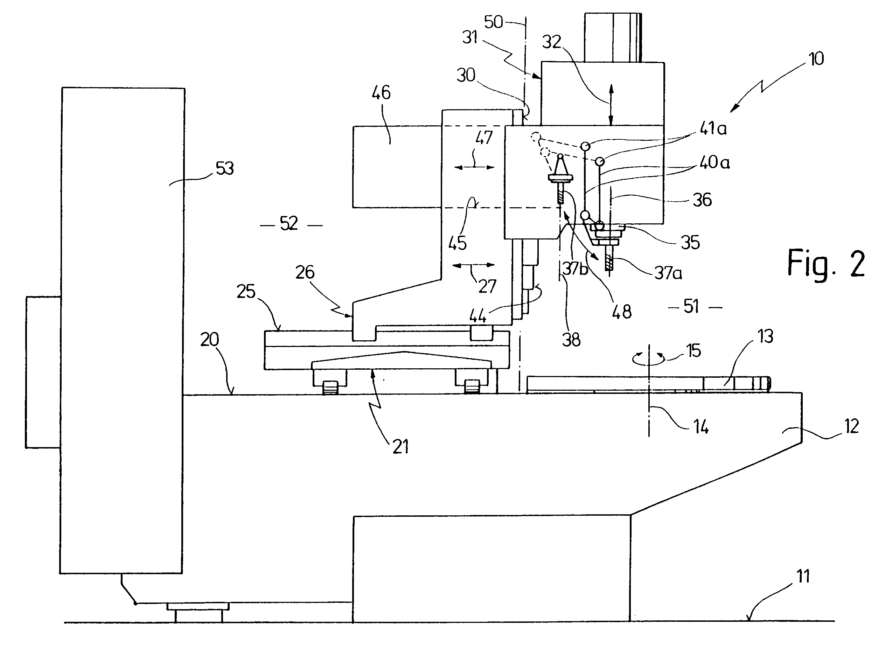

In den Figuren 1 und 2 bezeichnet 10 insgesamt eine Werkzeugmaschine. Die Werkzeugmaschine 10 ist ein sogenanntes Bearbeitungszentrum, das heißt eine Werkzeugmaschine, die an Werkstücken vorzugsweise Bohr- und Fräsarbeiten ausführt, und zwar unter numerischer Kontrolle eines Steuergerätes. Für die verschiedenen Bearbeitungsschritte werden im Bearbeitungszentrum vorbestimmte Werkzeuge aus einem Werkzeugmagazin ausgewählt und in die Spindel eingespannt. Nach Abschluß des Bearbeitungsschrittes wird das Werkzeug gewechselt, und mit dem nächsten Werkzeug wird der nächste Bearbeitungsschritt ausgeführt.

Die Werkzeugmaschine 10 steht auf einem Fundament 11 und umfaßt einen Werkstücktisch 12, der im dargestellten Ausführungsbeispiel raumfest ist. Es sind jedoch auch Bearbeitungszentren mit im Raum verfahrbaren Werkstücktischen bekannt.

Auf dem Werkstücktisch 12 befindet sich ein Werkstückwechsler 13. Der Werkstückwechsler 13 besteht im wesentlichen aus einem Tisch, der um eine vertikale Achse 14 verdrehbar ist, wie mit einem Pfeil 15 angedeutet. Der Werkstückwechsler 13 dreht sich bei Beginn bzw. beim Ende jedes Bearbeitungsvorganges um 180°, so daß auf der einen Seite des Werkstückwechslers 13 das zuvor bearbeitete Werkstück entnommen und ein neues, noch rohes Werkstück aufgespannt werden kann, während auf der gegenüberliegenden Seite des Werkstückwechslers 13 das zuvor aufgespannte Werkstück gerade bearbeitet wird.

Bei der Werkzeugmaschine 10 können die Werkzeuge relativ zum Werkstück entlang von drei kartesischen Koordinaten verfahren werden.

Hierzu dient zunächst ein erster, mit dem Werkstücktisch 12 verbundener Support 20, auf dem ein erster Schlitten 21 in Längsrichtung verfahrbar ist, wie mit einem Pfeil 22 angedeutet. Diese Verfahrachse wird als X-Achse bezeichnet.

Der erste Schlitten 21 trägt einen zweiten Support 25 mit einer Führung für einen zweiten Schlitten 26, der auch als Fahrständer bezeichnet wird. Der zweite Schlitten 26 ist in einer Richtung 27 senkrecht zur Verfahrrichtung des ersten Schlittens 21 verfahrbar. Die Verfahrachse des zweiten Schlittens bzw. Fahrständers 26 wird als Y-Achse bezeichnet.

Die X-Achse und die Y-Achse bilden die horizontalen Hauptachsen der Werkzeugmaschine 10.

Am Fahrständer 26 befindet sich ein dritter Support 30 für einen dritten Schlitten, der den Spindelstock 31 trägt. Die Verfahrachse des Spindelstocks 31 verläuft vertikal und wird als Z-Achse bezeichnet. Sie ist in Figuren 1 und 2 mit einem Pfeil 32 angedeutet. Die Z-Achse bildet die dritte, vertikale Hauptachse der Werkzeugmaschine 10.

Im Spindelstock 31 befindet sich eine Spindel 35, deren Achse 36, wie erwähnt, vertikal verläuft und damit eine Arbeitsposition für Werkzeuge definiert.

Die eigentlichen Werkzeuge sind in Werkzeughaltern gehalten, von denen in den Figuren 1 und 2 mit 37a derjenige bezeichnet ist, der sich im dargestellten Zustand gerade in der Spindel 35 befindet.

Mit 37b ist ein zweiter Werkzeughalter bezeichnet, der sich oberhalb und hinter der Arbeitsposition 36 befindet, und zwar in einer Übergabeposition 38. Die Werkzeughalter 37a und 37b sind beide vertikalachsig ausgerichtet.

Zum Überführen der Werkzeughalter 37a, 37b zwischen Arbeitsposition 36 und Übergabeposition 38 dienen Greifarme 40a, 40b, die zu beiden Seiten des Spindelstocks 31 angelenkt sind. Die Gelenkigkeit der Greifarme 40a, 40b ist in den Figuren 1 und 2 mit Achsen 41a, 41b angedeutet. Es muß jedoch an dieser Stelle ausdrücklich betont werden, daß die eingezeichneten Achsen 41a, 41b nur extrem schematisch zu verstehen sind, da bei der erfindungsgemäßen Werkzeugmaschine 10 wesentlich kompliziertere Gelenkanordnungen für die Greifarme 40a, 40b verwendet werden, wie weiter unten im einzelnen noch beschrieben werden wird.

Die Übergabeposition 38 befindet sich an einer Vorderseite 44 des Fahrständers 26, wie man deutlich aus Fig. 2 erkennt.

Die Vorderseite 44 des Fahrständers 26 bildet zugleich die Mündung eines Tunnels 45, der den Fahrständer 26 von der Vorderseite 44 bis zur Rückseite durchsetzt. In der Darstellung der Fig. 1 ist die Vorderansicht insoweit aufgebrochen, um den Tunnel 45 deutlicher darstellen zu können. Die Mündung des Tunnels 45 befindet sich hinter der Spindel, die in Fig. 1 der Übersichtlichkeit halber in der aufgebrochenen Darstellung weggelassen wurde.

An der Rückseite befindet sich ein Speicher 46 eines Werkzeugmagazins. Der Speicher 46 steht mit einer nur mit einem Pfeil 47 angedeuteten Transporteinrichtung in Verbindung, um einzelne Werkzeughalter aus dem Speicher 46 zur Übergabeposition 38 zu bringen oder umgekehrt. Der Speicher 46 und die Transporteinrichtung 47 bilden damit zusammen das Werkzeugmagazin.

Der Speicher 46 ist beim Ausführungsbeispiel der Figuren 1 und 2 mit dem Spindelstock 31 verbunden und wird daher zusammen mit diesem entlang aller drei Hauptachsen X, Y, Z verfahren, wie dies an sich unter der Fachbezeichnung "variable Werkzeugwechselebene" bekannt ist.

Um die Werkzeughalter 37a, 37b in der beschriebenen Weise überführen zu können, ist ein Werkzeugwechsel zwischen den Positionen 36, 38 erforderlich, wie in Fig. 2 mit einem Pfeil 48 angedeutet. Dieser Werkzeugwechsel wird weiter unten noch im einzelnen erläutert werden.

Mit 50 ist schließlich in Fig. 2 angedeutet, daß ungefähr in der Ebene der Vorderseite 44 des Fahrständers 26 eine Trennwand vorgesehen werden kann, die eine vollständige Kapselung des vorderen Bereiches der Werkzeugmaschine 10 vom hinteren Bereich ermöglicht. Mit der Trennwand 50 kann insbesondere der Arbeitsraum 51 der Werkzeuge vom rückwärtigen Raum 52 bzw. den dort befindlichen Aggregaten getrennt werden, beispielsweise den Installationskästen 53 und dergleichen. Bei der dargestellten Anordnung gemäß Fig. 2 ist auch der Speicher 46 des Werkzeugmagazins vom Arbeitsraum 51 sauber getrennt. In diesem Falle wird die einzige Durchbrechung der Trennwand 50 durch den Fahrständer 26 gebildet, während gesonderte Durchbrechungen für einen Werkzeugwechsel nicht erforderlich sind, da dieser über den Tunnel 45 im Fahrständer 26 erfolgt.

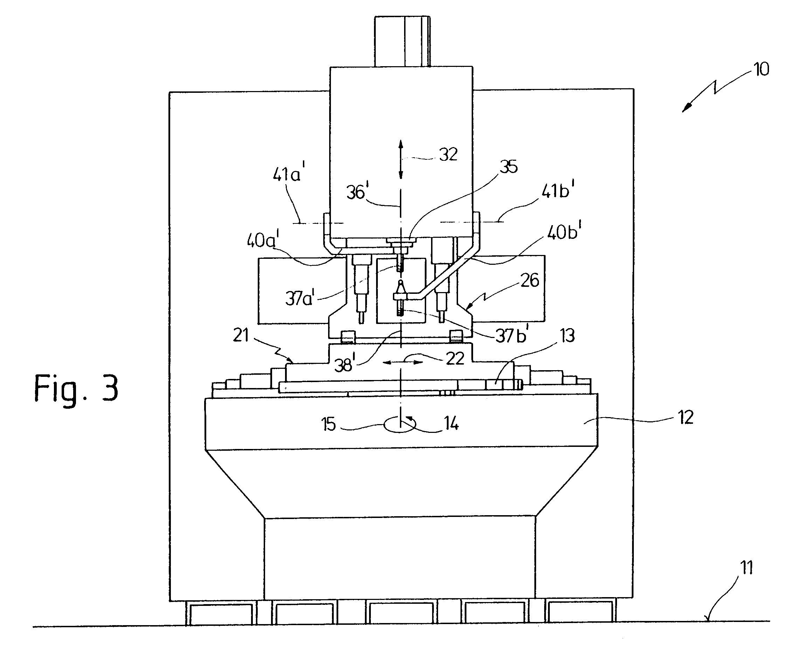

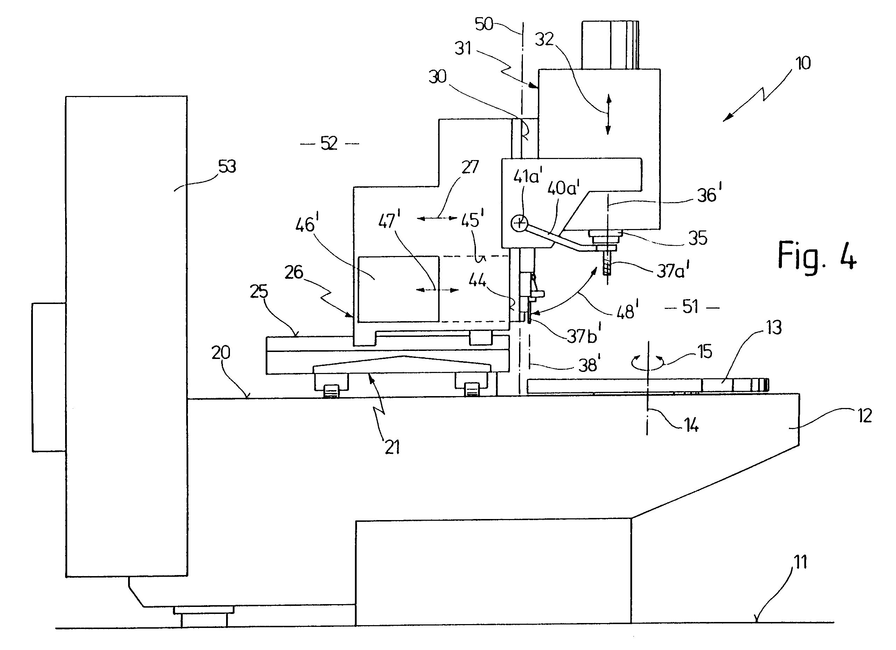

In den Figuren 3 und 4 ist ein leicht variiertes Ausführungsbeispiel dargestellt, das weitgehend demjenigen der Figuren 1 und 2 ähnelt. Insoweit sind gleiche Elemente wiederum mit denselben Bezugszeichen versehen. Wo Abweichungen vorhanden sind, sind vergleichbare Bezugszeichen durch einen Apostroph ergänzt worden.

Der wesentliche Unterschied bei der Werkzeugmaschine gemäß Figuren 3 und 4 besteht darin, daß die Übergabeposition 38 sich unterhalb der Arbeitsposition 36 befindet. Folglich durchsetzt der Tunnel 45 den Fahrständer 26 in einer unteren Position, wie man deutlich in Fig. 4 sieht.

Das Ausführungsbeispiel gemäß den Figuren 3 und 4 eignet sich insbesondere für solche Werkzeugmaschinen, bei den das Werkzeugmagazin starr mit dem Fahrständer verbunden ist.

Der Aufbau und die Wirkungsweise des Werkzeugwechslers, insbesondere der Greifarme 40a' und 40b' stimmt mit demjenigen der Figuren 1 und 2 überein, die Greifarme 40a' und 40b' müssen lediglich klappsymmetrisch, verglichen mit den Greifarmen 40a und 40b montiert werden, wie dies weiter unten noch ersichtlich werden wird.

Um den Werkzeugwechsel beim Ausführungsbeispiel gemäß den Figuren 1 und 2 zwischen den Positionen 36, 38 zu bewirken, ist ein Werkzeugwechsler mit den Greifarmen 40a, 40b erforderlich, der nun im einzelnen beschrieben werden soll:

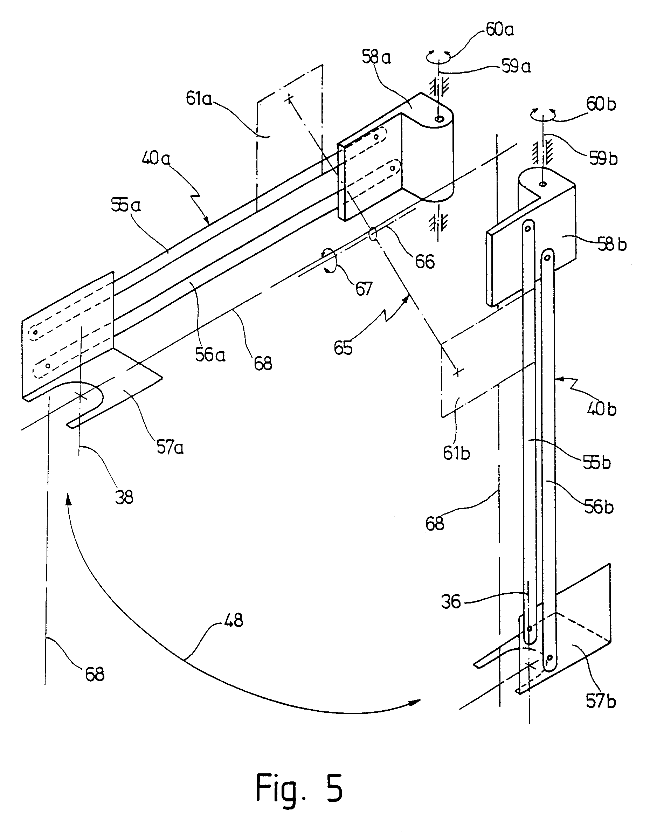

In den Figuren 5 bis 7 sind die Greifarme 40a, 40b in weiteren Einzelheiten dargestellt.

Man erkennt, daß jeder der Greifarme 40a, 40b im Prinzip als Gelenkparallelogramm ausgebildet ist. Hierzu weisen beide Greifarme 40a, 40b ein Paar paralleler Stangen 55a, 56a bzw. 55b, 56b auf. Die Stangen 55a, 56a, 55b, 56b sind am vorderen Ende jeweils in einer Hand 57a bzw. 57b und am hinteren Ende jeweils mit einem Schwenkteil 58a bzw. 58b gelagert. Auf diese Weise ist es möglich, die Greifarme 40a, 40b sowohl in eine horizontale Stellung wie auch in eine vertikale Stellung zu verschwenken.

Die Schwenkteile 58a, 58b sind ihrerseits um spindelfeste Achsen 59a, 59b verschwenkbar, wie mit Pfeilen 60a, 60b angedeutet. Die Achsen 59a, 59b verlaufen vertikal.

Die jeweils obere bzw. vordere Stange 55a, 55b der Greifarme 40a, 40b ist jeweils mit einer Halteplatte 61a bzw. 61b versehen, die zugleich als Hebelarm dient. An den Halteplatten bzw. Hebelarmen 61a, 61b greifen nämlich die Enden eines in den Figuren 5 bis 7 nur extrem schematisch angedeuteten, mehrfach gelenkigen Gestänges 65 an, das zum Verschwenken der Greifarme 40a, 40b dient.

Das Gestänge 65 ist um eine spindelfeste Achse 66 mittels einer geeigneten Betätigungseinheit verdrehbar, wie mit einem Pfeil 67 angedeutet. Die Achse 66 verläuft horizontal.

Aus Fig. 5 ist ferner zu erkennen, daß, wie bereits erwähnt, die Achsen der Positionen 36, 38 eine gemeinsame Vertikalebene definieren, die in Fig. 5 mit Strichen 68 symbolisiert ist.

Zum Werkzeugwechsel aus einer entgegengesetzten in die in den Figuren 1 und 2 eingezeichnete Stellung ist es nun erforderlich, daß die Aufnahmen für die Werkzeughalter in den Händen 57a bzw. 57b ihre in Fig. 3 eingezeichneten Stellungen vertauschen, so daß der noch horizontal ausgerichtete Greifarm 40a dann gemäß den Figuren 1 und 2 vertikal und der noch vertikal ausgerichtete Greifarm 40b dann horizontal verläuft.

Zu diesem Zweck wird das relativ zur Achse 66 symmetrische Gestänge 65 um die Achse 66 verschwenkt.

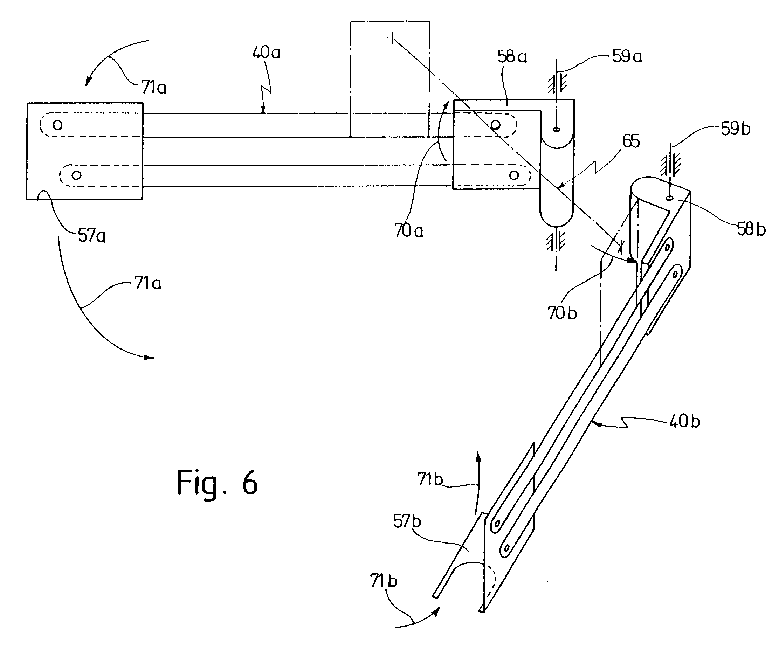

Wie man in Fig. 4 erkennt, werden zu diesem Zwecke die Schwenkteile 58a und 58b um die spindelfesten Achsen 59a, 59b jeweils nach außen verschwenkt, so daß die Greifarme 40a, 40b zueinander gespreizt werden. Der in den Figuren 5 und 6 linke Arm 40a verschwenkt somit nach außen und nach unten, wie mit Pfeilen 71a in Fig. 6 angedeutet. Der in den Figuren 5 und 6 rechte Arm 40b verschwenkt ebenfalls nach außen, gleichzeitig aber nach oben, wie mit Pfeilen 71b in Fig. 6 angedeutet.

Dadurch, daß die Greifarme 40a, 40b zueinander gespreizt werden, kann es in der in Fig. 6 angedeuteten Mittelstellung nicht zu einer Kollision der Werkzeughalter kommen, die in den Händen 57a und 57b gehalten sind (nicht dargestellt).

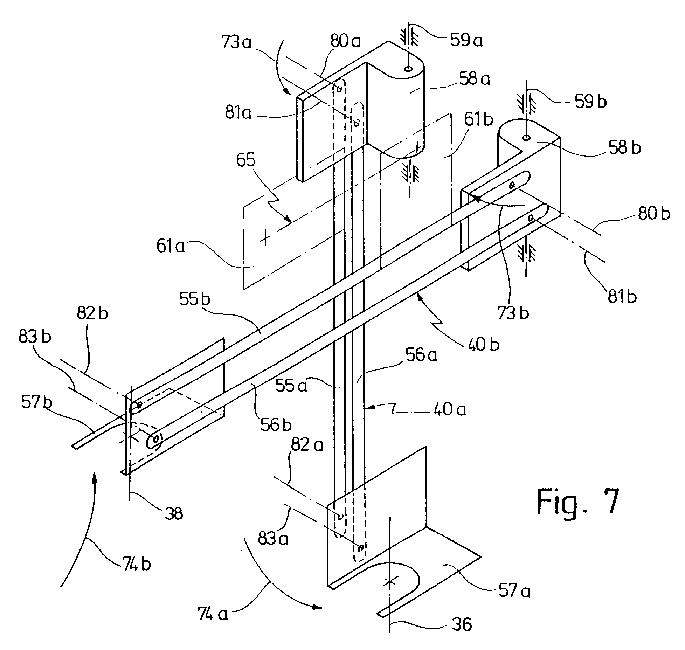

Zum Erreichen der gegenüber der einen Arbeitsstellung in Fig. 5 entgegengesetzten Arbeitsstellung gemäß den Figuren 1 und 2 bzw. 7 werden die Schwenkteile 58a und 58b wieder zueinander verschwenkt, wie mit Pfeilen 73a, 73b in Fig. 7 angedeutet. Die Schwenkteile 58a und 58b nehmen am Ende des Werkzeugwechsels somit wieder ihre Ausgangsstellung ein.

Der Greifarm 40a wurde dadurch jedoch weiter nach unten und zusätzlich nach innen verschwenkt, wie mit einem Pfeil 74a angedeutet, während der Greifarm 40b nach oben und wieder nach innen verschwenkt wurde, wie mit einem Pfeil 74b angedeutet. Die Hände 57a, 57b haben nun gegenüber ihrer Ausgangsstellung gemäß Fig. 5 die Positionen vertauscht. Da die Hände 57a und 57b jeweils nach innen ausladen, befinden sich die Werkzeughalteraufnahmen am Ende jeden Werkzeugwechsels jeweils auf den Positionen 36 bzw. 38.

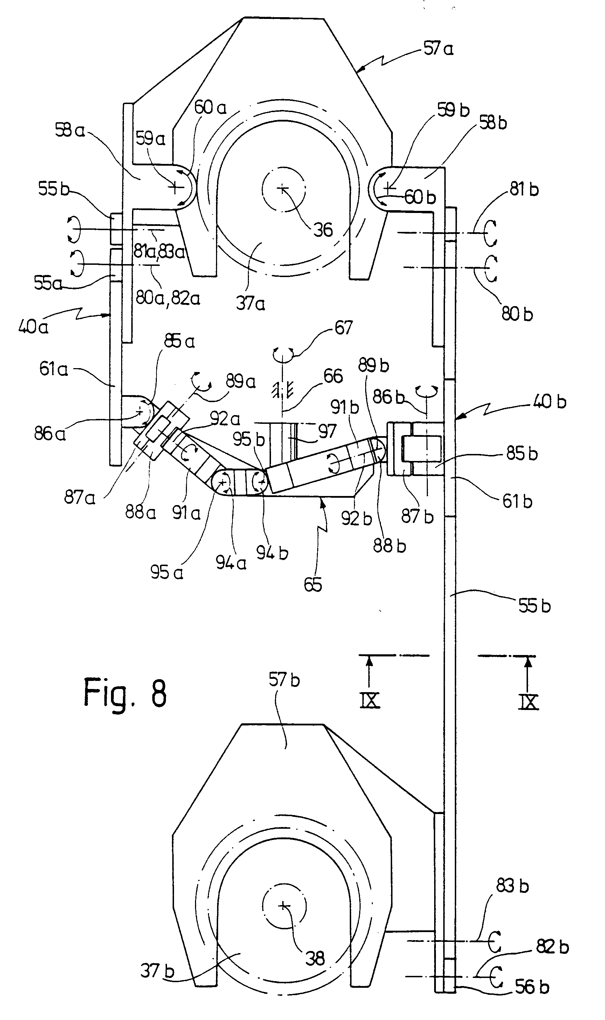

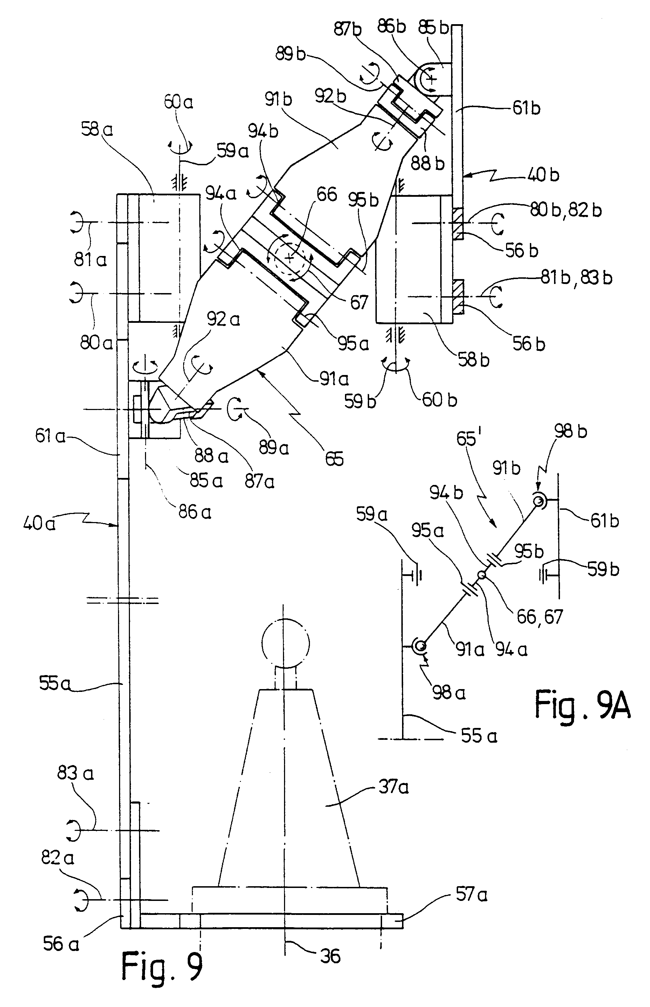

Das zum Verschwenken der Greifarme 40a und 40b verwendete Gestänge 65 soll nun nachstehend anhand der Figuren 8 und 9 erläutert werden:
Zur Erklärung des Bewegungsablaufes sollen zunächst die Schwenkachsen für die beiden Gelenkparallelogramme definiert werden, und zwar sind in den Figuren 8 und 9 mit 80a, 81a, 82a, 83a die vier Schwenkachsen des Greifarmes 40a und mit 80b, 81b, 82b, 83b die entsprechenden Schwenkachsen des Gelenkparallelogramms im Greifarm 40b bezeichnet.

An den Hebelarmen bzw. Halteplatten 61a und 61b befindet sich nun, vorzugsweise im Abstand von der zugehörigen Stange 55a bzw. 55b, der jeweilige Angriffspunkt für die freien Enden des Gestänges 65.

Das Gestänge 65 wird an seinen äußeren Enden durch ein erstes Gelenkstück 85a bzw. 85b gebildet, das starr mit dem Hebelarm bzw. der Halteplatte 61 bzw. 61b verbunden ist. Das erste Gelenkstück 85a bzw. 85b ist über eine erste Achse 86a bzw. 86b schwenkbar mit einem zweiten Gelenkstück 87a bzw. 87b verbunden. Das zweite Gelenkstück 87a bzw. 87b ist seinerseits mit einem dritten Gelenkstück 88a bzw. 88b über eine zweite Achse 89a bzw. 89b gelenkig verbunden. Das dritte Gelenkstück 88a bzw. 88b ist wiederum mit einem vierten Gelenkstück 91a bzw. 91b über eine dritte Achse 92a bzw. 92b schwenkbar verbunden.

Die drei Achsen 86a bzw. 86b, 89a bzw. 89b und 92a bzw. 92b stehen jeweils aufeinander senkrecht.

Die vierten Gelenkstücke 91a bzw. 91b sind jeweils flügelartig ausgebildet. Sie sind ihrerseits mit einem fünften Gelenkstück 94a bzw. 94b über eine vierte Achse 95a bzw. 95b schwenkbar verbunden.

Die fünften Gelenkstücke 94a und 94b sind starr miteinander verbunden, vorzugsweise sind sie einstückig miteinander ausgebildet.

Die vierten Achsen 95a und 95b, die zueinander parallel verlaufen, erstrecken sich rechtwinklig zu den dritten Achsen 92a und 92b. Sie liegen in einer Ebene, die im rechten Winkel zur Vertikalebene 68 verläuft. Die fünften Gelenkstücke 94a und 94b sind mit einer Antriebswelle 97 drehfest verbunden, die sich entlang der spindelfesten Achse 66 erstreckt. Wird die Antriebswelle 97 gedreht, wie mit Pfeilen 67 angedeutet, so werden die vierten Achsen 95a und 95b in der bereits erwähnten Ebene verdreht, die unter einem rechten Winkel zur Vertikalebene 68 und ebenfalls vertikal verläuft.

Wie man aus den Figuren 8 und 9 erkennen kann, verlaufen die flügelartigen vierten Gelenkstücke 91a und 91b in dieser Betriebsstellung beide nach hinten abgewinkelt. Außerdem sind sie schräg zur Horizontalen angestellt, wie man deutlich aus Fig. 9 erkennt. Wird nun die in der Achse 66 verlaufende Antriebswelle 97 des Gestänges 65 verdreht, so ist leicht einzusehen, daß die flügelartigen vierten Gelenkstücke 91a und 91b nach vorne verschwenkt werden und damit über die durch die drei Achsen 86/89/92 gebildete Gelenkanordnung die Greifarme 40a und 40b nach außen spreizen (vergleiche Fig. 6). In der entgegengesetzten Endstellung verschwenken sich die flügelartigen vierten Gelenkstücke 91a und 91b hingegen wiederum nach hinten, so daß beide Greifarme 40a und 40b wieder parallel zueinander verlaufen und lediglich eine zu den Figuren 8 und 9 symmetrische Position entsteht.

Durch die Anlenkung der flügelartigen vierten Gelenkstücke 91a und 91b in den vierten Achsen 95a und 95b einerseits sowie die durch die drei Achsen 86/89/92 definierte Gelenkanordnung wird dabei erreicht, daß eine Drehmomentübertragung von der Antriebswelle 97 bis hin zu den Greifarmen 40a und 40b möglich ist und der beschriebene Bewegungsablauf stattfindet.

Die Gelenkparallelogramme werden dabei um die weiter oben definierten Achsen 80 bis 83 in an sich bekannter Weise verschwenkt, so daß die Ausrichtung der Werkzeughalter 37a und 37b mit vertikaler Achsrichtung erhalten bleibt.

Da die Hände 57a und 57b so an den freien Enden der Greifarme 40a und 40b angeordnet sind, daß ihre Aufnahmen in den beiden Endstellungen miteinander fluchten, ist auch gewährleistet, daß sich die Werkzeughalter in den beiden Endlagen des Werkzeugwechslers jeweils an der Arbeitsposition 36 bzw. der Übergabeposition 38 befinden.

In Fig. 9A ist in einer Darstellung ähnlich Fig. 9, jedoch extrem schematisiert, eine Variante einer Ausführung des Gestänges 65' dargestellt.

Da nämlich die bereits erwähnten drei Achsen 86/89/92 jeweils aufeinander senkrecht stehen und eine gemeinsame Gelenkanordnung bilden, kann diese auch durch ein Kugelgelenk ersetzt werden, wie mit 98a und 98b in Fig. 9A dargestellt. Im übrigen ist die Anordnung unverändert.

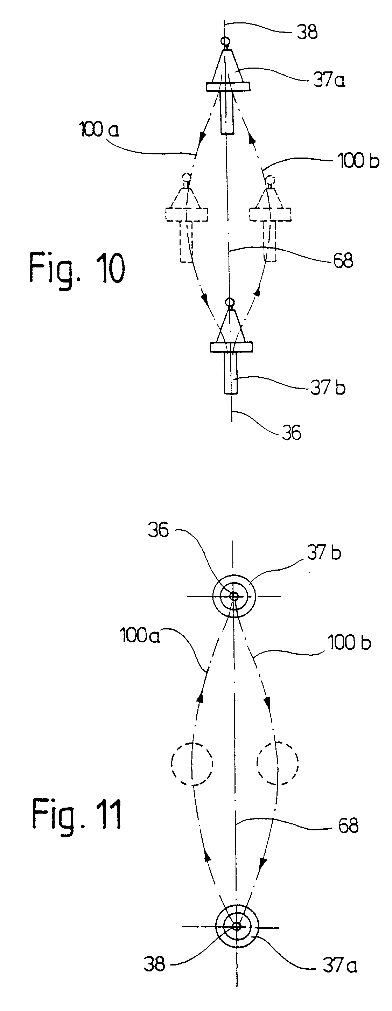

In den Figuren 10 und 11 ist schließlich nochmals in Ansichten ähnlich den Figuren 8 bzw. 9 der Bewegungsablauf für die Werkzeughalter 37a und 37b beim Werkzeugwechsel angegeben.

Man erkennt deutlich, daß sowohl in der Vorderansicht gemäß Fig. 10 wie auch in der Draufsicht gemäß Fig. 11 Ortskurven 100a und 100b entstehen, die jeweils von der gemeinsamen Vertikalebene 68 ausgehen, dann seitlich beabstandet zur Vertikalebene 68 verlaufen und schließlich wieder in dieser münden. Auf diese Weise werden Kollisionen während des Bewegungsablaufes sicher vermieden.

## Patentansprüche

1. Werkzeugmaschine mit einem entlang einer horizontalen Hauptachse (Y) verfahrbaren Fahrständer (26), einem am Fahrständer (26) entlang einer vertikalen Hauptachse (Z) verfahrbaren Spindelstock (31) mit drehbarer Spindel (35), einem Werkzeugmagazin (46, 47), in dem eine Mehrzahl von Werkzeughaltern (37a, 37b) gespeichert und einzeln in eine Übergabeposition (38, 38') bringbar ist, und mit zwei Greifarmen (40a, 40b) zum Überführen der Werkzeughalter (37a, 37b) zwischen der Übergabeposition (38, 38') am Werkzeugmagazin (46, 47) und einer Arbeitsposition (36, 36') in der Spindel (35) unter Beibehaltung der Orientierung der Werkzeughalter (37a, 37b), wobei die Greifarme (40a, 40b) getrennt am Spindelstock (31) gelagert und gleichzeitig sowie gegenläufig mit Händen (57a, 57b) zum Halten der Werkzeughalter (37a, 37b) zwischen der Übergabeposition (38, 38') und der Arbeitsposition (36, 36') entlang von Ortskurven (100a, 100b) verschwenkbar sind, dadurch gekennzeichnet, daß die Übergabeposition (38, 38') und die Arbeitsposition (36) in einer gemeinsamen, in Y-Richtung verlaufenden Vertikalebene (68) liegen, daß sich die Übergabeposition (38, 38') im Bereich der dem Spindelstock (31) zu weisenden Vorderseite (44) des Fahrständers (26) befindet, daß das Werkzeugmagazin (46, 47) sich von einer Rückseite des Fahrständers (26) durch einen Tunnel (45) im Fahrständer (26) bis zur Übergabeposition (38, 38') erstreckt, und daß die Ortskurven (100a, 100b) im Bereich zwischen den Positionen (36, 36', 38, 38') seitlich beabstandet von der Vertikalebene (68) verlaufen.

2. Werkzeugmaschine nach Anspruch 1, dadurch gekennzeichnet, daß sich die Übergabeposition (38) oberhalb der Arbeitsposition (36) befindet.

3. Werkzeugmaschine nach Anspruch 1, dadurch gekennzeichnet, daß sich die Übergabeposition (38') unterhalb der Arbeitsposition (36') befindet.

4. Werkzeugmaschine nach einem oder mehreren der Ansprüche 1 bis 3, dadurch gekennzeichnet, daß das Werkzeugmagazin (46, 47) einen auf der Rückseite des Fahrständers (26) angeordneten Speicher (46, 46') sowie eine sich durch den Tunnel (45) erstreckende Transporteinrichtung (47) umfaßt.

5. Werkzeugmaschine nach Anspruch 4, dadurch gekennzeichnet, daß der Speicher (46) mit dem Spindelstock (31) verbunden ist.

6. Werkzeugmaschine nach Anspruch 4, dadurch gekennzeichnet, daß der Speicher (46') mit dem Fahrständer (26) verbunden ist.

7. Werkzeugmaschine nach einem oder mehreren der Ansprüche 1 bis 6, dadurch gekennzeichnet, daß die Greifarme (40a, 40b) als Gelenkparallelogramme ausgebildet sind, deren parallele Stangen (55a, 56a, 55b, 56b) in einer vertikalen Ebene an Schwenkteilen (58a, 58b), um erste, horizontale Achsen (80a, 81a, 80b, 81b) schwenkbar, angelenkt sind, wobei die Schwenkteile (58a, 58b), um zweite, vertikale Achsen (59a, 59b) verschwenkbar, am Spindelstock (31) gelagert sind.

8. Werkzeugmaschine nach Anspruch 7, dadurch gekennzeichnet, daß die Greifarme (40a, 40b) mittels eines Gestänges (65) um die ersten und die zweiten Achsen (59a, 59b, 80a, 81a, 80b, 81b) verschwenkbar sind, wobei das Gestänge (65)
a) symmetrisch zur Vertikalebene (68) ausgebildet ist,
b) um eine in der Vertikalebene (68) liegende dritte Achse (66) verschwenkbar ist, und
c) zwei flügelartige Gelenkstücke (91a, 91b) umfaßt, die einerseits um vierte Achsen (95a, 95b) verschwenkbar sind, welche beidseits der Vertikalebene (68) in einer zu dieser quer verlaufenden Ebene angeordnet und gemeinsam um die dritte Achse (66) verschwenkbar sind, und andererseits über eine durch die aufeinander senkrecht stehenden Achsen (86a, 86b, 89a, 89b, 92a, 92b) definierte Gelenkanordnung (85a, 85b, 87a, 87b, 88a, 88b, 91a, 91b; 97a, 97b) mit einer der parallelen Stangen (55a, 55b) in Verbindung steht.

9. Werkzeugmaschine nach Anspruch 8, dadurch gekennzeichnet, daß das Gestänge (65) an Hebelarmen (61a, 61b) angreift, die mit der einen parallelen Stange (55a, 55b) verbunden sind.

10. Werkzeugmaschine nach Anspruch 8 oder 9, dadurch gekennzeichnet, daß die Gelenkanordnungen aus drei Einzelgelenken (85a, 85b, 87a, 87b, 88a, 88b, 91a, 91b) bestehen.

11. Werkzeugmaschine nach Anspruch 8 oder 9, dadurch gekennzeichnet, daß die Gelenkanordnungen aus einem Kugelgelenk (97a, 97b) bestehen.

## Claims

1. A machine tool comprising a traveling column (26) that can be moved along a horizontal main axis (Y); a spindle head (31), with a rotatable spindle (35) that can be moved on the traveling column (26) along a vertical main axis (Z); a tool magazine (46, 47) in which a plurality of tool holders (37a, 37b) is stored and can be brought individually into a transfer position (38, 38'); and comprising two gripper arms (40a, 40b) to convey the tool holders (37a, 37b) between the transfer position (38, 38') on the tool magazine (46, 47) and a working position (36, 36') in the spindle (35) while retaining the orientation of the tool holders (37a, 37b), such that the gripper arms (40a, 40b) are separately mounted on the spindle head (31) and can be pivoted simultaneously and in opposite directions along locus curves (100a, 100b) with hands (57a, 57b) to hold the tool holders (37a, 37b) between the transfer position (38, 38') and the working position (36, 36'), characterized in that the transfer position (38, 38') and the working position (36) lie in a common vertical plane (68) extending in the Y-direction, that the transfer position (38, 38') is located in the region of the front side (44), facing toward the spindle head (31), of the traveling column (26), that the tool magazin (46, 47) extends from a rear side of the traveling column (26), through a tunnel (45) in the traveling column (26), to the transfer position (38, 38'), and that in the region between the positions (36, 36', 38, 38'), the locus curves (100a, 100b) run at a lateral distance from the vertical plane (68).

2. The machine tool of claim 1, characterized in that the transfer position (38) is located above the working position (36).

3. The machine tool of claim 1, characterized in that the transfer position (38') is located below the working position (36').

4. The machine tool of one or more of claims 1 to 3, characterized in that the tool magazin (46, 47) comprises a storage area (46, 46') arranged on the rear side of the traveling column (26), as well as a transport device (47) extending through the tunnel (45).

5. The machine tool of claim 4, characterized in that the storage area (46) is joined to the spindle head (31).

6. The machine tool of claim 4, characterized in that the storage area (46') is joined to the traveling column (26).

7. The machine tool of one or more of claims 1 to 6, characterized in that the gripper arms (40a, 40b) are configured as articulated parallelograms, the parallel rods (55a, 56a, 55b, 56b) of which being pivotable in a vertical plane on pivot elements (58a, 58b) about first, horizontal axes (80a, 81a, 80b, 81b), the pivot elements (58a, 58b) being mounted on the spindle head (31) so as to pivot about second, vertical axes (59a, 59b).

8. The machine tool of claim 7, characterized in that the gripper arms (40a, 40b) can pivot about the first and the second axes (59a, 59b, 80a, 81a, 80b, 81b) by means of a linkage (65), such that the linkage (65):
a) is configured symmetrically with respect to the vertical plane (68);
b) can pivot about an axis (66) lying in the vertical plane (68); and
c) comprises two winglike linkage parts (91a, 91b) that on the one hand can pivot about fourth axes (95a, 95b) that are arranged on either side of the vertical plane (68) in a plane running perpendicular thereto, and can pivot together about the third axis (66); and on the other hand are connected by means of a linkage arrangement (85a, 85b, 87a, 87b, 88a, 88b, 91a, 91b, 97a, 97b) defined by three mutually perpendicular axes (86a, 86b, 89a, 89b, 92a, 92b), to one of the parallel rods (55a, 55b).

9. The machine tool of claim 8, characterized in said the linkage (65) acts on lever arms (61a, 61b) that are connected with the one parallel rod (55a, 55b).

10. The machine tool of claim 8 or 9, characterized in that the articulated arrangements consist of three individual articulations (85a, 85b, 87a, 87b, 88a, 88b, 91a, 91b).

11. The machine tool of claim 8 or 9, characterized in that the articulated arrangements consist of one ball joint (97a, 97b).

## Revendications

1. Machine-outil avec un montant mobile (26) déplaçable le long d'un axe principal (Y) horizontal, une poupée porte-broche (31), déplaçable sur le montant mobile (26), le long d'un axe principal (Z) vertical, avec broche (35) tournante, un magasin à outils (46, 47), dans lequel sont stockés plusieurs porte-outils (37a, 37b) qui peuvent être amenés individuellement dans une position de transfert (38, 38'), et avec deux bras de préhension (40a, 40b) pour le transfert des porte-outils (37a, 37b) entre la position de transfert (38, 38') sur le magasin à outils (46, 47) et une position de travail (36, 36') dans la broche (35), en conservant l'orientation des porte-outils (37a, 37b), les bras de préhension (40a, 40b) étant montés séparément sur la poupée porte-broche (31) et pouvant être pivotés simultanément ainsi qu'en sens contraires, avec des mains (57a, 57b) en vue du maintien des porte-outils (37a, 37b) entre la position de transfert (38, 38') et la position de travail (36, 36'), le long de courbes géométriques (100a, 100b), caractérisée en ce que la position de transfert (38, 38') et la position de travail (36) se situent dans un même plan vertical (68), s'étendant dans la direction (Y), en ce que la position de transfert (38, 38') se trouve dans la région de la face avant (44), dirigée vers la poupée porte-broche (31), du montant mobile (26), en ce que le magasin à outils (46, 47) s'étend depuis une face arrière du montant mobile (26), à travers un tunnel (45), dans le montant mobile (26), jusqu'à la position de transfert (38, 38'), et en ce que les courbes géométriques (100a, 100b) s'étendent dans la zone comprise entre les positions (36, 36', 38, 38'), espacées latéralement du plan vertical (68).

2. Machine-outil selon la revendication 1, caractérisée en ce que la position de transfert (38) se trouve au-dessus de la position de travail (36).

3. Machine-outil selon la revendication 1, caractérisée en ce que la position de transfert (38) se trouve au-dessous de la position de travail (36').

4. Machine-outil selon une ou plusieurs des revendications 1 à 3, caractérisée en ce que le magasin à outils (46, 47) comprend un stockeur (46, 46'), placé sur la face arrière du montant mobile (26), ainsi qu'un dispositif de transport (47), s'étendant à travers le tunnel (45).

5. Machine-outil selon la revendication 4, caractérisée en ce que le stockeur (46) est relié à la poupée porte-broche (31).

6. Machine-outil selon la revendication 4, caractérisée en ce que le stockeur (46') est relié au montant mobile (26).

7. Machine-outil selon une ou plusieurs des revendications 1 à 6, caractérisée en ce que les bras de préhension (40a, 40b) sont conformés en parallélogrammes articulés, dont les tiges parallèles (55a, 56a, 55b, 56b) sont articulées dans un plan vertical sur des éléments de pivotement (58a, 58b), de manière à pouvoir pivoter autour de premiers axes, horizontaux (80a, 81a, 80b, 81b), les éléments de pivotement (58a, 58b) étant montés sur la poupée porte-broche (31), de manière à pouvoir pivoter autour de deuxièmes axes, verticaux (59a, 59b).

8. Machine-outil selon la revendication 7, caractérisée en ce que les bras de préhension (40a, 40b) peuvent pivoter au moyen d'une tringlerie (65) autour des premiers et des deuxièmes axes (59a, 59b, 80a, 81a, 80b, 81b), la tringlerie (65)
a) étant symétrique par rapport au plan vertical (68),
b) pouvant pivoter autour d'un troisième axe (66), se situant dans le plan vertical (68) et
c) comprenant deux pièces d'articulation (91a, 91b) réalisées à la manière d'ailes, qui d'une part peuvent pivoter autour de quatrièmes axes (95a, 95b), qui sont disposés des deux côtés du plan vertical (68) dans un plan transversal à celui-ci et peuvent pivoter conjointement autour du troisième axe (66), et d'autre part sont en liaison, par un dispositif d'articulation (85a, 85b, 87a, 87b, 88a, 88b, 91a, 91b ; 97a, 97b), défini par les axes (86a, 86b, 89a, 89b, 92a, 92b), perpendiculaires les uns aux autres, avec l'une des tiges parallèles (55a, 55b).

9. Machine-outil selon la revendication 8, caractérisée en ce que la tringlerie (65) agit sur des bras de levier (61a, 61b), qui sont reliés à une tige parallèle (55a, 55b).

10. Machine-outil selon la revendication 8 ou 9, caractérisée en ce que les dispositifs d'articulation sont constitués par trois articulations individuelles (85a, 85b, 87a, 87b, 88a, 88b, 91a, 91b).

11. Machine-outil selon la revendication 8 ou 9, caractérisée en ce que les dispositifs d'articulation sont constitués par une articulation sphérique (97a, 97b).
